# EUROPEAN PATENT APPLICATION

(11) **EP 4 160 504 A1**
(43) Date of publication of application: **05.04.2023**
(21) Application number: 22188744.1
(22) Date of filing: 04.08.2022
(51) Int. Cl.: G06Q 20/40

(54) **TRIAGING ALERTS USING MACHINE LEARNING**

(30) Priority: 01.10.2021 PT 2021117496; 11.11.2021 PT 2021117568; 02.06.2022 US 202217831199
(71) Applicant: Feedzai - Consultadoria e Inovação Tecnológica, S.A., 3030-199 Coimbra (PT)
(72) Inventor: NASER EDDIN, AHMAD, 3030-199 COIMBRA (PT); BONO, JACOPO, 3030-199 COIMBRA (PT); BARRIGA NEGRA ASCENSÃO, JOAO TIAGO, 3030-199 COIMBRA (PT); SANTOS RODRIGUES BIZARRO, PEDRO GUSTAVO, 3030-199 COIMBRA (PT)
(74) Representative: Patentree

(57) **Abstract**

The present document discloses relates to a computer-implemented process for triaging alerts using machine learning includes receiving data associated with transactions and using computer processor(s) to analyze the received data using rule(s) to automatically identify potentially suspicious activities. The process includes scoring each of the identified potentially suspicious activities using a machine learning model and based at least in part on analysis results of the rule(s) associated with the identified potentially suspicious activities, and triaging the identified potentially suspicious activities including by determining an action to take with respect to at least a portion of the identified potentially suspicious activities based at least in part on the scoring. In various embodiments, a process for training a machine learning model to triage alerts includes configuring the machine learning model, and receiving training data. The process includes using computer processor(s) and the received training data to train the machine learning model to score potentially suspicious activities.

## Description

### TECHNICAL FIELD

The present disclosure relates to a computer-implemented method for triaging rule-based alerts from transactional data using machine learning.

### BACKGROUND

Rule-based systems are typically used to analyze data by applying one or more rules to the data and outputting alerts if the data meets criteria set forth by the rules. For example, an anti-money laundering system may include rules defined by human experts. The rules are used to interpret transactional data to predict whether transactions are part of a money-laundering scheme. An alert is generated for those transactions that are potentially part of a money-laundering scheme. A security analyst may then review the alert to determine how to respond. However, there may be a large number of alerts or a high false positive rate, making the review of the alerts tedious or inefficient.

These facts are disclosed in order to illustrate the technical problem addressed by the present disclosure.

### GENERAL DESCRIPTION

One of the problems solved by the present disclosure is how to provide improved alerts to identify and score potentially suspicious activities in transactional data. The present disclosure solves this problem by a method for triaging alerts using machine learning and training said machine learning model. The method includes receiving data associated with transactions and using computer processor(s) to analyze the received data using rule(s) to automatically identify potentially suspicious activities. The process includes scoring each of the identified potentially suspicious activities using a machine learning model and based at least in part on analysis results of the rule(s) associated with the identified potentially suspicious activities and triaging the identified potentially suspicious activities including by determining an action to take with respect to at least a portion of the identified potentially suspicious activities based at least in part on the scoring.

One of the goals of the present disclosure is to maximize the suspicious activity captured by the triage model, true positives, while minimizing incorrect alerts, false positives. It was chosen an optimization objective to maximize recall at a specific False Positive Rate (FPR). The FPR can be chosen in accordance with the client. Experimentally, for instance achieving a perfect recall at 20%FPR translates to a reduction of the false positives by 80% compared to the rule system itself.

In a first aspect, the present document discloses a computer-implemented method, comprising:
receiving data associated with transactions;
using one or more computer processors to analyze the received transaction data using one or more rules to automatically identify potentially suspicious activities;
scoring each of the identified potentially suspicious activities using a machine learning model and based at least in part on analysis results of the one or more rules associated with the identified potentially suspicious activities; and
triaging the identified potentially suspicious activities including by determining an action to take with respect to at least a portion of the identified potentially suspicious activities based at least in part on the scoring of each of the identified potentially suspicious activities.

In an embodiment, said method further comprises extracting a first set of features and a second set of features associated with the received data, wherein:
the first set of features is used to analyze the received data using the one or more rules to automatically identify potentially suspicious activities, and
the second set of features is used to score each of the identified potentially suspicious activities using the machine learning model.

In an embodiment, triaging the identified potentially suspicious activities includes changing a priority of at least one of the identified potentially suspicious activities.

In an embodiment, said method further comprises:
determining a scored list of the identified potentially suspicious activities;
providing the scored list of the identified potentially suspicious activities;
receiving feedback associated with the scored list of the identified potentially suspicious activities; and
updating the machine learning model based on the received feedback.

In an embodiment, said method further comprises:
determining an explanation for a decision associated with the triaging; and
providing the explanation, wherein:
   providing the explanation includes initially providing a second-level explanation that includes a grouping of features that belong to a same concept or semantic group.

In an embodiment, providing the explanation further includes providing a first-level explanation after providing the second-level explanation; and the first-level explanation includes features and associated contributions used by the machine learning model to determine the decision associated with the automatic triaging.

In a second aspect the present document also discloses a computer-implemented method for training a machine learning model, comprising:
configuring a machine learning model;
receiving training data; and
using one or more computer processors and the received training data to train the machine learning model to score potentially suspicious activities, wherein:
   the potentially suspicious activities are identified by one or more rules in a set of rules, and the scoring of each of the identified potentially suspicious activities is used to determine an action to take with respect to at least a portion of the identified potentially suspicious activities.

In an embodiment, said training method further comprises, in response to a determination that at least one identified potentially suspicious activity is different from previously-identified potentially suspicious activities:
forming a set of potentially suspicious activities;
re-configuring the machine learning model in response to a determination that a threshold amount of labeled data has been gathered for the formed set of potentially suspicious activities; and
using the one or more computer processors and the gathered labeled data to re-train the machine learning model.

In an embodiment, said training method further comprises:
monitoring performance of the machine learning model; and
in response to a determination that the performance of the machine learning model is below a performance threshold, performing at least one of:
   re-configuring the machine learning model, or
   using the one or more computer processors to re-train the machine learning model;
   wherein, preferably, the performance of the machine learning model is monitored continuously.

In an embodiment, monitoring the performance of the machine learning model includes determining a label of at least one of the potentially suspicious activities that is assigned a score below a priority threshold by the trained machine learning model.

In an embodiment, monitoring the performance of the machine learning model includes determining that the performance meets a performance threshold, the performance threshold being based at least in part on a percentage of positives in a group of potentially suspicious activities scoring below a priority threshold, preferably randomly selected.

In an embodiment, in response to the determination that the performance of the machine learning model is below a performance threshold, re-configuring the machine learning model including by selecting a new model threshold, or re-train the machine learning model, preferably using an explanation generated by the machine learning model.

In a third aspect, the present document discloses a computer-implemented system, comprising:
a processor configured to:
receive data associated with transactions;
use one or more computer processors to analyze the received data using one or more rules to automatically identify potentially suspicious activities;
score each of the identified potentially suspicious activities using a machine learning model and based at least in part on analysis results of the one or more rules associated with the identified potentially suspicious activities; and
triage the identified potentially suspicious activities including by determining an action to take with respect to at least a portion of the identified potentially suspicious activities based at least in part on the scoring of each of the identified potentially suspicious activities; and
a memory coupled to the processor and configured to provide the processor with instructions.

In an embodiment, the processor of said system is further configured to extract a first set of features and a second set of features associated with the received data, wherein:
the first set of features is used to analyze the received data using the one or more rules to automatically identify potentially suspicious activities, and
the second set of features is used to score each of the identified potentially suspicious activities using the machine learning model.

In another embodiment, the first and the second set of features overlap partially, or totally, or are two different set of features.

In an additional embodiment, the processor of said system is further configured to:
configure the machine learning model;
receive training data; and
use one or more computer processors and the received training data to train the machine learning model to score potentially suspicious activities.

In an embodiment, the set of features are computed periodically, e.g., every day, in a sliding window for constructing a dynamic graph.

In an embodiment, triaging the alerts includes ranking alerts by score, grouping alerts into various importance levels, sending alerts to teams or analysts for review, hibernating alerts, or creating different queues (e.g., group by risk) to be addressed by different teams or analysts.

In an embodiment, the training data include entity-centric features, i.e., profile features, and neighborhood-centric features like degree and GuiltyWalker features, wherein the profile features are a first set of features comprising the history of transactions specific to each account, the degree features represent the number of counterparties of an account and its neighborhood, and GuiltyWalker features include the average length of a random walk to reach an illicit node and the number of distinct illicit nodes encountered

In an embodiment, the training data features, e.g., GuiltyWalker features, are delayed for a period of time to simulate a real-world scenario.

### BRIEF DESCRIPTION OF THE DRAWINGS

The following figures provide preferred embodiments for illustrating the disclosure and should not be seen as limiting the scope of invention.
**Figure 1****:** is a flow diagram illustrating an embodiment of a process for triaging alerts using machine learning.
**Figure 2****:** is a flow diagram illustrating an embodiment of a process for triaging alerts using machine learning and feedback.
**Figure 3****:** is a flow diagram illustrating an embodiment of a process for alert optimization including determining explanations for alert processing.
**Figure 4****:** is a block diagram illustrating an embodiment of a system for alert optimization using machine learning to triage alerts.
**Figure 5****:** is a flow diagram illustrating an embodiment of a process for training a machine learning model to triage alerts.
**Figure 6****:** is a flow diagram illustrating an embodiment of a process for re-training a machine learning model to triage alerts.
**Figure 7****:** is a flow diagram illustrating an embodiment of a process for monitoring performance of a machine learning model that triages alerts.
**Figure 8A****:** is a diagram illustrating an example of a graphical user interface for showing an explanation of alert triaging by a machine learning model.
**Figure 8B****:** is a diagram illustrating an example of a graphical user interface for alert optimization using machine learning to triage alerts.
**Figure 9****:** is a flow diagram for a full system overview and triage model details.
**Figure 10****:** is a representation of graph construction.
**Figure 11****:** is a graphical representation of experimental data of the triage models with graph features.
**Figure 12****:** is a graphical representation of experimental data of label delay tests for the GuiltyWalker features.
**Figure 13****:** is a graphical representation of experimental data of time window tests in the graph construction process.

### DETAILED DESCRIPTION

The present document discloses relates to a computer-implemented process for triaging alerts using machine learning includes receiving data associated with transactions and using computer processor(s) to analyze the received data using rule(s) to automatically identify potentially suspicious activities. The process includes scoring each of the identified potentially suspicious activities using a machine learning model and based at least in part on analysis results of the rule(s) associated with the identified potentially suspicious activities, and triaging the identified potentially suspicious activities including by determining an action to take with respect to at least a portion of the identified potentially suspicious activities based at least in part on the scoring. In various embodiments, a process for training a machine learning model to triage alerts includes configuring the machine learning model, and receiving training data. The process includes using computer processor(s) and the received training data to train the machine learning model to score potentially suspicious activities.

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Techniques for triaging alerts using machine learning are disclosed. In various embodiments, a triage machine learning model is configured and trained to score alerts reflecting an importance of a case (e.g., likelihood of being suspicious). An "alert" or an "alerted transaction" refers to transactions alerted by rules as further described herein. The triage model facilitates and optimizes alert review because it allows the usage of resources for alert review to be improved. An alert manager then determines an action to take with respect to the alert such as ranking alerts, forwarding the alert for analyst review, assigning the alert to an appropriate queue, or the like. For example, alerts can be ranked based on their scores. Cases that are likely to be true positives (e.g., as defined by a score threshold) are prioritized by assigning them to a first queue and cases that are less likely to be true positives are assigned to a second queue. The first queue gets reviewed immediately by senior analysts, while the second queue is reviewed by a less senior team. If an analyst considers a case in the second queue to be suspicious, then the case can be escalated to the first queue. In various embodiments, explanations for the triage model's decisions can be determined and output to aid analysts in their investigation and review of alerts. In various embodiments, the triage model can be monitored, adapted, and re-trained, e.g., in response to model performance change or rule set changes. For example, a new rule bypasses triage prior to having sufficient labels to re-train the model.

In various embodiments, a process for triaging alerts includes receiving data associated with transactions and using one or more computer processors to analyze the received data using one or more rules to automatically identify potentially suspicious activities. Based at least in part on analysis results of the one or more rules associated with the identified potentially suspicious activities, the process uses a machine learning model to at least in part automatically triage the identified potentially suspicious activities to automatically process at least a portion of the identified potentially suspicious activities.

In various embodiments, a process for training a machine learning model to triage alerts includes configuring a machine learning model and receiving training data (e.g., alerted transactions). The process uses one or more computer processors and the received training data to train the machine learning model to triage potentially suspicious activities including by automatically processing at least a portion of the potentially suspicious activities, where the potentially suspicious activities are identified by one or more rules in a set of rules.

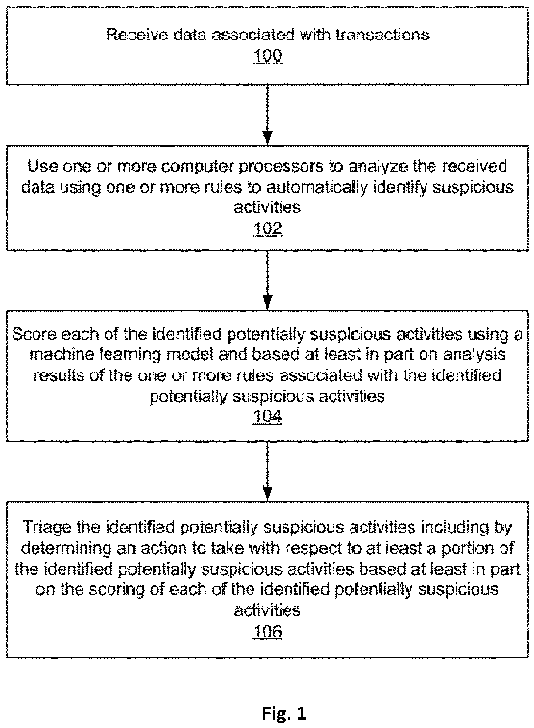

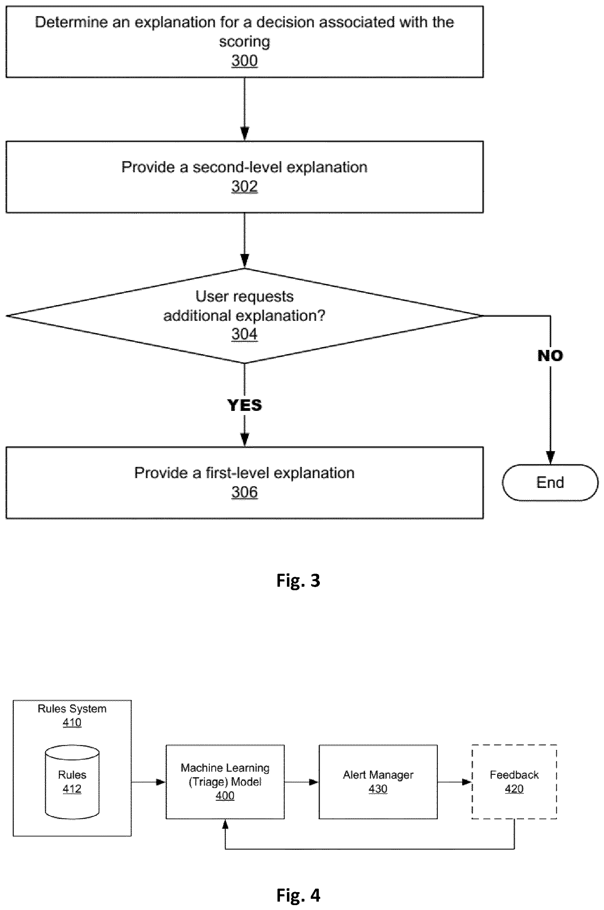

FIG. 1 is a flow diagram illustrating an embodiment of a process for triaging alerts using machine learning. This process may be implemented on or by the system shown in FIG. 4.

In the example shown, the process begins by receiving data associated with transactions (100). The data can be enriched to extract features. The process can extract the features associated with the received data, or the features can be provided to the process along with the data. For example, the process extracts a first set of features to be used to analyze the received data using the one or more rules to automatically identify potentially suspicious activities. The process extracts a second set of features to be used to score each of the identified potentially suspicious activities using the machine learning model. In other words, some features may be used by one or more rules to identify suspicious activities and some features may be used by a machine learning model to triage the identified suspicious activities. The features used by the rule(s) and the features used by the model may be the same, different, or overlap.

The process uses one or more computer processors to analyze the received data using one or more rules to automatically identify potentially suspicious activities (102). The processor(s) may analyze the received data by applying one or more rules to the data. The rules may generate an alert or otherwise flag those entities (e.g., customer, account) or transactions that are associated with potentially suspicious activities.

For example, in an anti-money laundering system, relevant features used by the rule(s) include, but are not limited to:
Characteristics of an account/customer such as profession or age
Typical behavior of the customer including typical movements of money such as the average amount spent in the last week or the number of transfers on the last day.

The process scores each of the identified potentially suspicious activities using a machine learning model based at least in part on analysis results of the one or more rules associated with the identified potentially suspicious activities (104). The machine learning model is trained to assign a score to an identified potentially suspicious activity using the analysis result. For example, in an anti-money laundering system, relevant features used by the model include, but are not limited to:
Relationships of the customer and others the customer interacts with such as the number of unique counterparties or distance to suspicious customers;
Communities such as how much money is moving within a community, community size, closeness centrality, or betweenness centrality.

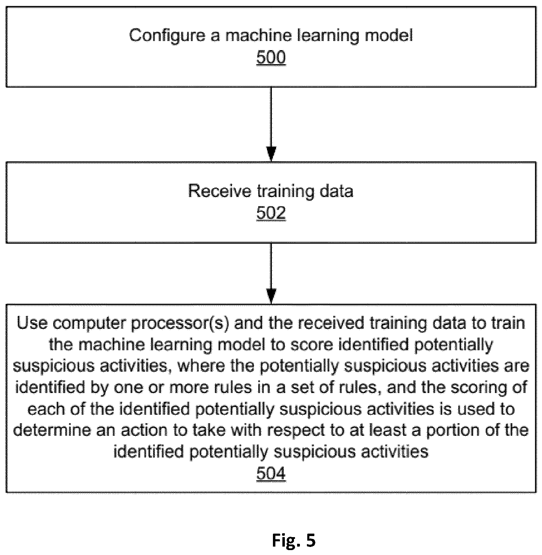

An example of how to train the model is shown in FIG. 5. An analysis result includes information associated with the alert such as the features described herein, which rules were triggered, and related transactions contributing to the same alerts. For example, a score indicates the likelihood of an activity being a true positive.

The process triages the identified potentially suspicious activities including by determining an action to take with respect to at least a portion of the identified potentially suspicious activities based at least in part on the scoring of each of the identified potentially suspicious activities (106). The score determined by the model can be used to determine an action to take (e.g., resolve) with respect to a potentially suspicious activity (also sometimes referred to as an alert) based on user rules or guidelines. The score can be used to determine actions to take such as:
rank alerts by score,
group alerts into various importance levels,
de-prioritize low importance alerts,
prioritize high importance alerts,
send alerts to teams or analysts for review,
hibernate alerts (which snoozes alerts and closes alerts after a specified time such as 60 days), or
create different queues (e.g., group by risk) to be addressed by different teams or analysts.

A user can define how to manage the priority of an alert. A priority of an alert can be changed by decreasing a priority (de-prioritizing) or increasing a priority (prioritizing) of the alert. An alert can be de-prioritized by removing the activity from the list or decreasing its rank or priority in the list. An alert can be prioritized by increasing its rank or priority in the list. Whether to de-prioritize or prioritize an alert can be based on a corresponding score. For example, alerts below some score threshold are de-prioritized and/or alerts above some score threshold are prioritized. As another example, alerts can be prioritized by only providing (e.g., storing or outputting) the top n activities, where n can be a pre-defined number such as the top 10 activities selected based on review capabilities available. The other activities are suppressed.

The actions described above are merely exemplary and not intended to be limiting. An action to take with respect to an identified potentially suspicious activity can be tailored to a use case and/or defined by a user depending on operations, risk appetite, applicable regulations, among other things.

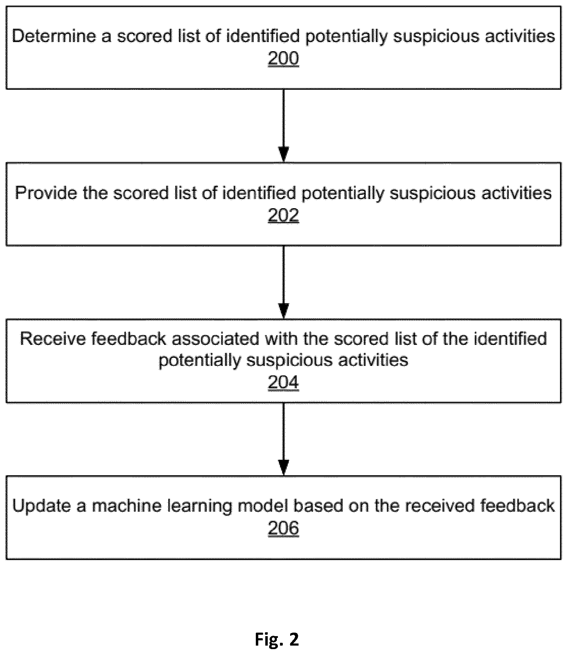

FIG. 2 is a flow diagram illustrating an embodiment of a process for triaging alerts using machine learning and feedback. This process may be implemented on or by the system shown in FIG. 4. This process may be implemented as part of another process such as after 104 of FIG. 1.

In the example shown, the process begins by determining a scored list of identified potentially suspicious activities (200). The list can be assembled by collecting identified potentially suspicious activities and querying a machine learning model to determine their scores.

The process provides the scored list of the identified potentially suspicious activities (202). For example, the process stores the list or outputs the list. The list can be obtained by a decision module such as an alert manager that determines an action to take with respect to an activity such as ranking the activities so they can be presented according to their risk as further described herein.

The process receives feedback associated with the scored list of the identified potentially suspicious activities (204). The feedback can be automatic feedback or feedback from a human. Examples of feedback include labels or other information such as a chargeback, whether an entity associated with a transaction is on a watchlist, the result of expert human review, etc.

The process updates the machine learning model based on the received feedback(206). For example, the machine learning model can be re-trained using the updated labels from the feedback.

FIG. 3 is a flow diagram illustrating an embodiment of a process for alert optimization including determining explanations for alert processing. This process may be implemented on or by the system shown in FIG. 4. This process may be implemented as part of another process such as after 104 of FIG. 1.

In the example shown, the process begins by determining an explanation for a decision associated with the scoring (300). The explanations used by the disclosed triage model can be used to provide insights into the scores. Human reviewers, regulators, and others may find this helpful. For example, explanations include what features contributed most to a model decision, which reviewers may find helpful. This can greatly decrease reviewer investigation time. As another example, if the triage model is used for alert suppression (e.g., low priority alerts are suppressed without human review), these explanations can be used to justify the decision to the regulators.

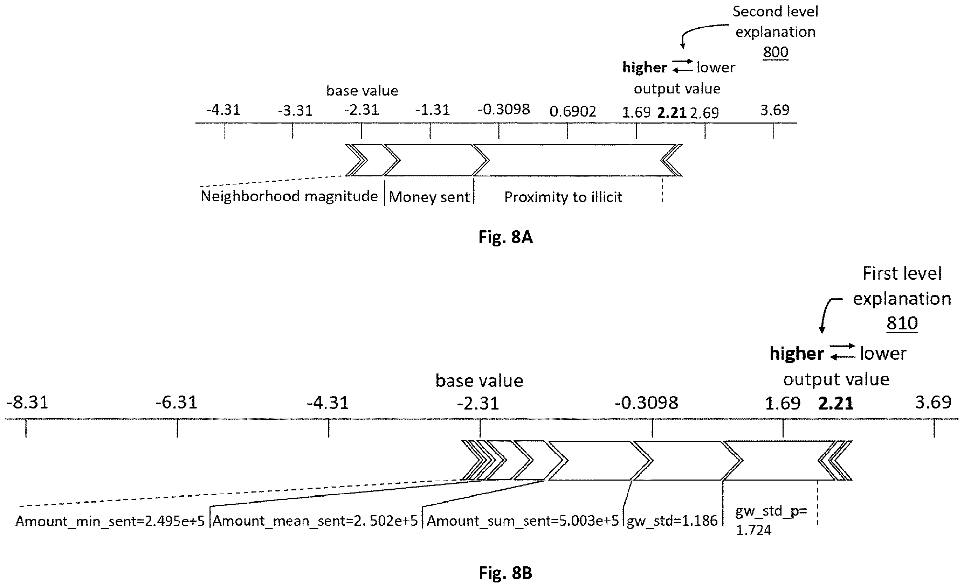

The process may then provide an explanation by performing 302 to 306. For example, providing the explanation includes initially providing a second-level explanation that includes a grouping of features that belong to a same concept or semantic group, followed by providing a first-level explanation as follows. In various embodiments, a multi-level explanation strategy is used to provide white-box explanations of predicted scores. A first level explanation (e.g., 810 of FIG. 8B) is more detailed and shows the specific features used by the model and their contributions to the model's decision. One way to determine the specific features is by using a TreeSHAP algorithm. This information could have some redundancy for a human reviewer since models typically use many features and some of the features could be capturing information about the same semantic meaning or concept. Thus, a second-level explanation can be presented.

The process provides a second-level explanation (302). A second level of explanation (e.g., 800 of FIG. 8A) can be presented to provide an aggregated view of the features by grouping the ones that belong to the same concept/semantic group together based on human expert knowledge. As described with respect to FIG. 3, in various embodiments, second level explanations are presented first.

If the user requests additional explanation (304), the process provides a first-level explanation. In various embodiments, the first-level explanation includes features and associated contributions used by the machine learning model to determine the decision associated with the automatic triaging. Otherwise, if the user does not request additional explanation, the process ends.

FIG. 4 is a block diagram illustrating an embodiment of a system for alert optimization using machine learning to triage alerts. The system includes a rules system 410, machine learning (triage) model 400, and an alert manager 430. Rules system 410 is configured to apply one or more rules from rules store 412 to generate one or more alerts. Machine learning (triage) model 400 is configured to score the alerts. Model 400 can be trained using the process of FIG. 5. Alert Manager 430 is configured to process the alerts based on the scores determined by the model, for example outputting some of the alerts for user review. Feedback (e.g., user review) 420 is optionally received and used to improve model 400 (e.g., by applying the process of FIG. 2) and/or rules sets in rules store 410.

In operation, the system of 400 is configured to perform the process of FIG. 1. Rules system 410 processes a transaction by applying rules 412. Alerts output by the rules system are triaged by the machine learning (triage model) using a score assigned to the alert by the model. The alert manager 430 then processes the alerts output by the model. Optionally, feedback such as user review 420 is used to improve the model 400.

FIG. 5 is a flow diagram illustrating an embodiment of a process for training a machine learning model to triage alerts. This process may be implemented on or by the system shown in FIG. 4.

In the example shown, the process begins by configuring a machine learning model (500). The model can be configured with initial settings such as parameters for how long to train the model, what learning rate to use or how strong regularization should be. If the model is being re-trained because the volume of alerts has changed, it can be configured with updated information such as new labels, as further described herein.

The process receives training data (502). In various embodiments, the training data includes potentially suspicious activities (alerts), which may be identified by applying rules to transactional data. The process may enrich the data to obtain various features. One type of feature is called an entity (or profile) feature. Another type of feature is called a neighborhood feature and may be subject to graph analysis (e.g., relationships of customers and communities).

Using the example of anti-money laundering, a set of entity/profile features engineered for the triage model characterizes the history of transactions specific to each account. A profile is an arithmetic aggregation by a particular field and over a specified time window, such as the total amount spent per account in the past week.

These features enable a machine learning model to contrast historical (long windows) with current behavior (short windows) and correlate that with suspicious activity. Example time windows include one day, one and two weeks, one and two months. In various embodiments, the aggregation functions include sum, mean, minimum, maximum, and count as well as those that may cover several time windows such as ratios and differences. Any feature selection (including permutation-based feature selection) can be performed over the profiles by training a gradient boosted trees model on a sample of the training dataset, keeping the smallest set of features which cumulatively contribute up to a predefined percentage (e.g., 90%) of the performance for the metric of interest. As a result, a subset of the profiles is selected to enrich the data. Profiles can be built by automatically generating features based on the semantic labels of the data fields (e.g., entity, location, date, or amount).

While profile features capture entity-centric behavior, graph features capture inter-entity relations. Because money flows occur between bank accounts, one choice is to represent accounts as nodes and transactions as edges between accounts. The direction of the edge follows the direction of the money (from sender to receiver), and edge attributes include the transaction timestamp and amount.

Scalability can be an issue when many events (e.g., on the order of millions) need to be processed per second. Since older events become progressively less relevant, a dynamic graph construction leveraging sliding windows to limit the number of events needed at any moment in time can be used. Similar to profile features, the graph-based features are computed periodically (e.g., every day) as follows. First, the graph snapshot of the previous day is updated by removing the edges that no longer fall within the sliding window and by adding new edges corresponding to the current day's events. Secondly, the graph features for every node with an event in the target day (accounts requiring evaluation) are calculated. The frequency is adaptable, in the performed experiments it was chosen one day.

Some examples of specific graph features used by the triage model for anti-money laundering are discussed but this is not intended to be limiting as the process can be applied to other graph-based features using the same or similar transactional graph. Suspicious accounts are expected to have more counterparties on average. To convey this information to the model, the in- and out-degrees of the target node are calculated. Additionally, in- and out-degrees of its successors and predecessors' mean, minimum, and maximum are calculated. In this way, eight new features are created that characterize the number of counterparties of an account and its neighborhood. Analogously, a weighted version of these features is calculated by using the transferred amount as the edge weight. Because the above features contain information from nodes that are one hop away from the target node, they cannot be captured by the profile features.

Money laundering patterns typically involve criminal networks. Therefore, suspicious nodes tend to have a higher probability of being connected to other suspicious nodes. This property is captured by Guilty-Walker (GW) features where random walks are generated which stop upon reaching a known illicit node or if there are no available connections. A predefined number of random walks, e.g., 50, can be run for each target node. Features characterizing the length of the random walks, e.g., minimum, maximum, median, mean, standard deviation, 25th, and 75th percentile, the fraction of successful random walks, the "hit rate", and the number of distinct illicit nodes encountered can be computed.

In anti-money laundering, feedback is typically not immediate because investigations tend to be lengthy. Because labels are typically not immediately available for all past transactions, a waiting period can be introduced as follows. A machine learning model is trained using profiles and degree features and other features that do not necessarily depend on the label on a first training set. The resulting model is used to score a second training set and define a suitable threshold to obtain pseudo-labels. The GuiltyWalker features are computed using the pseudo-labels for the unlabeled transactions in the waiting period and the actual labels otherwise, mentioned also as a Guilty Walker-delay features. Finally, the triage model is trained on the second training set, using profiles, degrees, and GuiltyWalker features.

The process uses one or more computer processors and the received training data to train the machine learning model to score potentially suspicious activities including by automatically processing at least a portion of the potentially suspicious activities, wherein the potentially suspicious activities are identified by one or more rules in a set of rules (504).

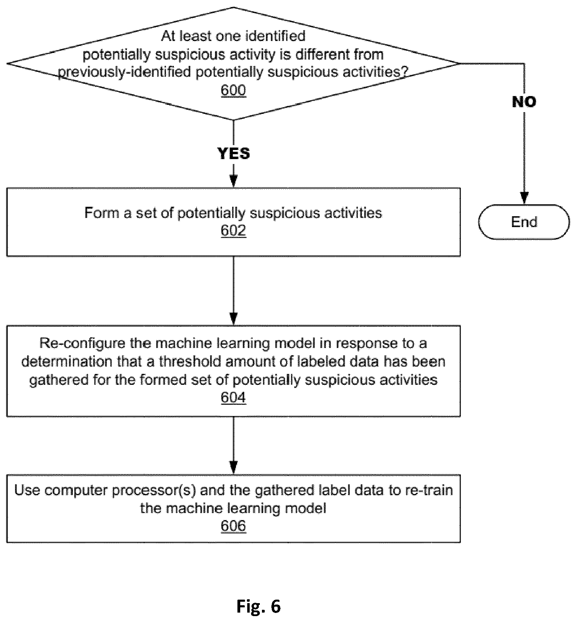

FIG. 6 is a flow diagram illustrating an embodiment of a process for re-training a machine learning model to triage alerts. This process may be implemented on or by the system shown in FIG. 4. This process may be implemented as part of another process such as after 504 of FIG. 5.

In the example shown, the process begins by determining whether at least one identified potentially suspicious activity is different from previously-identified potentially suspicious activities (600). In other words, the process determines whether the potentially suspicious activities are expected to be a subset of the original potentially suspicious activities. The set of alerts may change when the scope of a rule set changes such as by changing a threshold of one or more rules or adding one or more rules to the rule set. When the scope of a rule is expanded, the model can be re-trained so that the new alerts are appropriately triaged and processed. In various embodiments, when a new rule is added to the rule set, some of the alerts may overlap with alerts generated by other rules. Overlapping alerts are considered for prioritization (scored by the machine learning model), while the non-overlapping alerts are not scored by the model until after the model is re-trained.

If at least one identified potentially suspicious activity is not different from previously-identified potentially suspicious activities (e.g., the scope of the alerts remains unchanged), the process ends. For example, if a rule has been removed or a rule set is unchanged, the machine learning model does not need to be changed.

Otherwise, if at least one identified potentially suspicious activity is different from previously-identified potentially suspicious activities, the process proceeds to 602 to form a set of potentially suspicious activities. This set of alerts is expected to differ from an earlier set of alerts because the scope of alerts increases due to adding a rule or changing a threshold. More specifically, the pool of alerts is expected to grow and include some types of alerts that the model has not previously seen.

The process re-configures the machine learning model in response to a determination that a threshold amount of labeled data has been gathered for the formed set of potentially suspicious activities (604). The threshold amount of labeled data can be set so that the model is re-trained at an optimal time (not too frequently or infrequently).

The process uses computer processor(s) and the gathered labeled data to re-train the machine learning model (606). After the model is re-trained, it is able to (more accurately) score those new alerts that were generated due to the rule, threshold, or other change that caused the number of alerts to increase (or at least remain unchanged).

In various embodiments, alerts generated by rule set changes (e.g., a new rule) are handled as follows. The process runs the rule on historical data, and all or a sample of the alerts are reviewed by analysts. The sample can be selected at random, selected following active learning policies, etc. The machine learning model is re-trained using the new labels, and then the model is deployed for the entirety of the rule set.

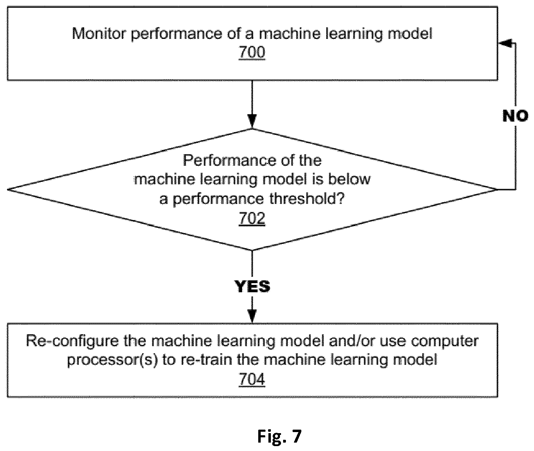

FIG. 7 is a flow diagram illustrating an embodiment of a process for monitoring performance of a machine learning model that triages alerts. This process may be implemented on or by the system shown in FIG. 4. This process may be implemented as part of another process such as after 504 of FIG. 5.

In the example shown, the process begins by monitoring performance of the machine learning model (700). In various embodiments, the performance of the machine learning model is monitored continuously. The model can be monitored by comparing model predictions with actual results (e.g., true labels) provided by human reviewers (e.g., 420). Although some alerts may be assigned to a lower priority queue because they score below a score threshold, they can nevertheless be evaluated earlier as follows. In various embodiments, monitoring the performance of the machine learning model includes determining a label (e.g., by a human reviewer) of at least one of the potentially suspicious activities that is assigned a score below a priority threshold by the trained machine learning model. Those low-scoring potentially suspicious activities (assigned a score below the priority threshold) for which labels are determined can be randomly selected. The number of such low-scoring alerts to review can be user-defined such as a pre-defined percentage of low-scoring alerts.

The process determines whether performance of the machine learning model is below a performance threshold (702). For example, the threshold is based on a percentage of positives in a group of low-scoring potentially suspicious activities.

If the performance of the machine learning model is not below a performance threshold, the process continues monitoring performance of the model (700).

Otherwise, if the performance of the machine learning model is below a performance threshold, the process proceeds to re-configure the machine learning model and/or use computer processor(s) to re-train the machine learning model (704). The model can be re-configured by selecting a new model threshold such as lowering the model score threshold below which an alert is suppressed. In various embodiments, an explanation (examples of which are described with respect to FIG. 3) generated by the machine learning model can be used to re-configure the machine learning model and/or re-train the machine learning model.

FIG. 8A is a diagram illustrating an example of a graphical user interface for showing an explanation of alert triaging by a machine learning model. As described with respect to FIG. 3, the explanations used by the disclosed triage model can be used to provide insights into the scores.

In this example, a second level explanation 800 is shown. Explanation 800 provides an aggregated view of the features by grouping the ones that belong to the same concept/semantic group together based on human expert knowledge. The specific features are neighborhood magnitude, money sent, and proximity to illicit are shown along with their corresponding contribution to the score (2.21). A reviewer can quickly tell at a glance that the feature "proximity to illicit" had the greatest contribution to the score.

FIG. 8B is a diagram illustrating an example of a graphical user interface for alert optimization using machine learning to triage alerts. In this example, a first level explanation 810 is shown. This explanation is more detailed. For example, the features amount_min_sent, amount_mean_sent, and amount_sum_sent can be grouped into "money sent" in FIG. 8A but are shown separately to provide more detail. As described with respect to FIG. 3, in various embodiments, second level explanations are presented first, and if a user wants to see more details they can be presented as shown in the figure.

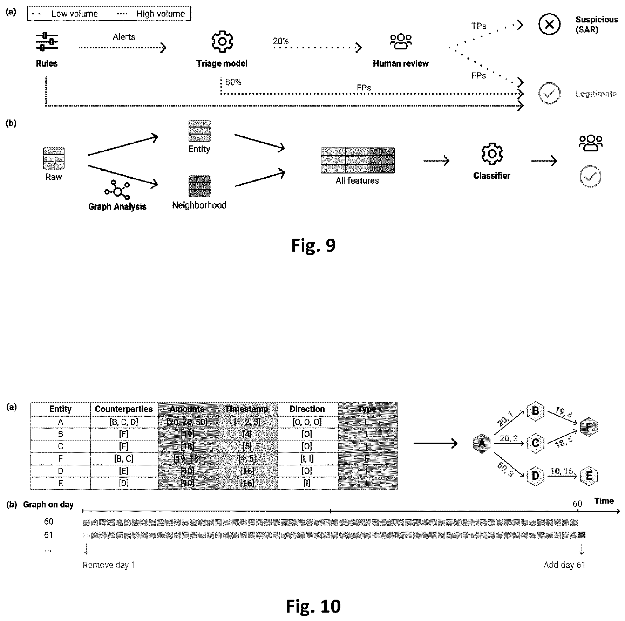

In an embodiment FIG. 9 shows a flow diagram for a full system overview and triage model. In (a) it is shown the disclosed triage model being downstream of the rules, eliminating the majority of the false positives. In (b) it is shown various types of features, entity-centric, and neighborhood-centric, e.g., degrees and illicit-relations, which are subsequently ingested by the triage model to classify suspicious activity.

In an embodiment FIG. 10 shows a representation of graph construction. Graph construction: (a) Toy example of the tabular data and how it was represented it in a graph: each entity (account in this case) is represented by a node, edges represent transactions between accounts and have the timestamp and amount of a transaction as attributes. (b) shows the sliding window procedure when building the graph, given a time window of 60 days; on the second day, it was removed the edges that fall outside the sliding window and add the ones corresponding to the current day.

A real-world banking dataset was used to evaluate the disclosed method. The raw dataset contains approximately half-million alerted transfers between 400,000 accounts and spans over approximately one year. It contains information on whether an account is internal to a bank or external. Transfers occur in both directions between two internal accounts or between an external and an internal account.

The dataset is labelled on a transaction level, with a binary label indicating whether a transaction was part of a SAR. However, it was proposed the triage classifier to generate alerts at the account level, as is typical in AML. Moreover, in these experiments, accounts were evaluated daily. Hence, the raw dataset was pre-processed to contain aggregated daily account features, including total sent and received amounts, the counterparties, the associated timestamps, and the direction. Then, the transactional labels were extrapolated to infer the account labels: if there is a suspicious transaction involving an account on a specific day, that account is marked as suspicious on that day. Importantly, this means that suspicious accounts form connected pairs in the pre-processed dataset. The percentage of suspicious accounts over all days in the dataset is less than 3%, resulting in over 97% false positives.

The dataset was temporally split into three non-overlapping periods. The oldest 60% was used for training, then 10% for validation, and the most recent 30% for testing the models, Train-Valid-Test split. For the GuiltyWalker-delay features, the training set was further split in half.

Experiments are performed on a real-world banking dataset, where the entities to be labelled are the bank accounts. All the models use the same inputs, which are the raw features explained previously, and a set of around 100 profiles based on each account's sent and received transfer amounts. The first triage model, i.e., the baseline is trained using only the raw features and these entity-centric profile features.

The aim is to maximize the suspicious activity captured by the triage model (true positives) while minimizing incorrect alerts (false positives). The optimization objective was chosen to maximize recall at a specific false positive rate (FPR).

In an embodiment, the FPR is chosen in accordance with the client.

In the disclosed experiments, it was considered a recall@20%FPR as the target metric, which translates to a reduction of the false positives by 80% compared to the rule system itself. Moreover, because most events are legitimate, the chosen FPR, i.e., 20%, roughly corresponds to the number of alerts to be reviewed to obtain a particular recall.

An extensive evaluation of various machine learning models was performed, namely Random Forest, Generalized Linear Modeling (GLM), and LightGBM (Ke et al. 2017) over a wide hyperparameter range. The various algorithms and hyperparameter ranges are reported in Table 1.

**Table 1: Various algorithms and respective hyperparameter values tried in the hyperparameter search.**

| **Algorithm** | **Hyperparameters** | |
|---|---|---|
| GLM | Alpha | [0.01 - 0.09] |
| | Standardize numericals | [True, False] |
| Random Forest | Max depth of trees | [10 - 40] |
| | Number of trees | [100 - 200] |
| | Min instances for split | [10 - 50] |
| LightGBM | Num of leaves | [200 - 500] |
| | Min data in leaf | [100 - 200] |
| | Learning rate | [0.01 - 0.09] |

The top performing model was a LightGBM, with a test performance close to 80%recall@20%FPR. This LightGBM model was considered as the baseline triage model in subsequent experiments.

It was considered that suspicious accounts are differently interconnected than legitimate accounts. To capture such relationships between accounts, a directed graph was built using the accounts as nodes and the transactions between accounts as directed edges. Because old events become less relevant for current predictions, the graph is dynamically constructed using a sliding window to only include accounts making recent transactions. In the next experiments graph snapshots were created covering time windows of 60 days and subsequently investigate different windows for suspicious and legitimate events.

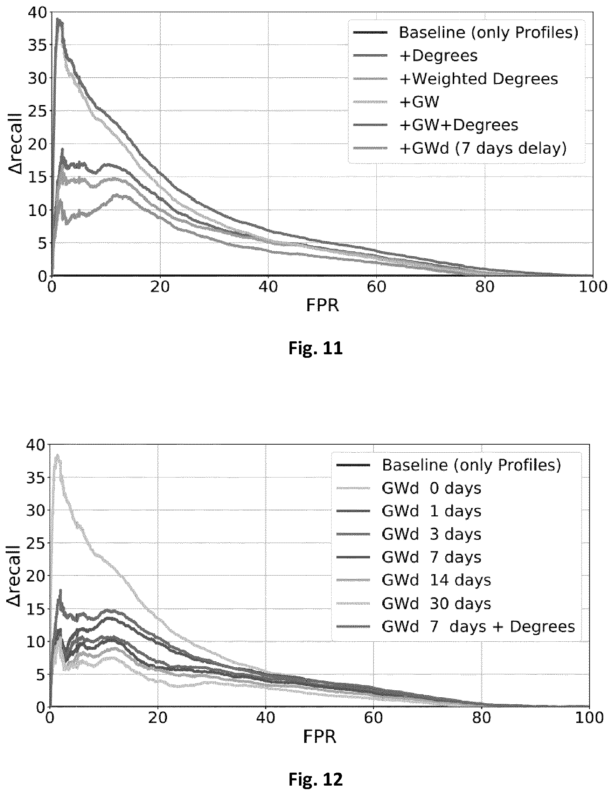

In an embodiment FIG. 11 shows a graphical representation of experimental data of the triage models with graph features. Difference in recall compared to the baseline model without graph features. GuiltyWalker (GW) features achieve large gains at low FPR. Adding degrees on top of GW features further improves performance at intermediate FPRs (GW+Degrees).

It was considered that the number of neighbors and the money flow may differ based on the account class. Therefore, the in- and out-degree features of a node and its one-hop neighbors were calculated. The neighbor degrees are aggregated using mean, minimum, and maximum operations. Adding these neighborhood degree features to the baseline model improves the performance by 11.6 percentage points (p.p.) Recall@20%FPR, corroborating the initial considerations. Weighted versions of these features were calculated, where the weight is the amount of money being transferred, but did not surpass the performance of standard degree features.

Because money laundering often manifests itself in networks of criminal accounts, it was considered an increased probability of finding connected suspicious nodes. Therefore, the GuiltyWalker (GW) features (Oliveira et al. 2021) were computed, which capture distance to suspicious nodes using random walks. Adding the GW features to the baseline model improves the performance by 13.4 p.p. in Recall@20%FPR. Interestingly, GW improves performance up to 35% in the lower FPR region.

The degree features and the GuiltyWalker feature were subsequently added in conjunction with the baseline model and investigate whether they capture different information. The results show that the two sets contain overlapping information, but the combined model is still better than models using any of the features separately: the gain achieved is 15.5 p.p. Recall@20%FPR.

The experiments show that GW features capture useful information for the task of reducing false positives. However, the original GW algorithm (Oliveira et al. 2021) assumes that every day we have all the accurate labels from the previous days. This assumption does not apply in realistic banking AML scenarios because it takes time for analysts to escalate alerts, review cases, and file SARs. Therefore, the GW algorithm was adapted to leverage a model score and a threshold to create pseudo-labels instead of the actual label for the most recent events. To determine the threshold hyperparameter, a grid search was performed.

In an embodiment, FIG. 12 shows a graphical representation of experimental data of label delay tests for the GuiltyWalker features. Label delay experiments: Increasing delay decreases recall. Adding degree features boosts the performance of the GWd models, shown for seven days delay: GWd 7 days + Degrees.

Label delay scenarios ranging from 1 day to 30 days were tested. As expected, the shorter the labelling delay, the better the performance. Despite a drop in performance compared to the original GW features at low FPRs, an exciting outcome of this experiment is that GWd features are beneficial when added to the baseline model, even with a label delay of one month.

Then, the combination of degree features and GWd features with the baseline model was tested. While adding the degree features improves the detection of true positives, it was noticed that it does not beat results when using the degree features without GWd. It was verified that this is also true when degrees are calculated on the smaller training set used for the GWd models, data not shown. Because the degrees features are computationally lighter to compute, a good choice in some scenarios is to discard the GWd features.

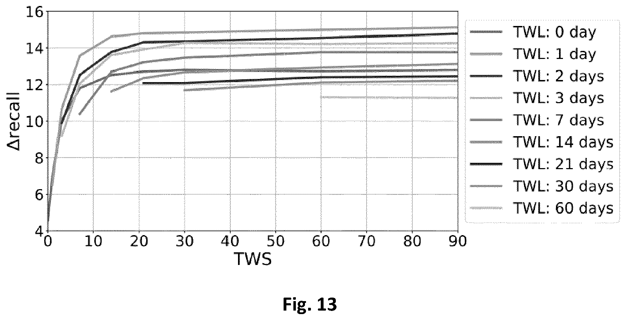

In an embodiment, FIG. 13 shows a graphical representation of experimental data of time window tests in the graph construction process. Time windows for suspicious events (TWS) reach a plateau in performance for values of 20-30 days. Time windows for legitimate events (TWL) reach maximum performance for a value of 1 day.

In the previous experiments, a dynamic graph was built using a sliding time window of 60 days. Here it was studied how changing this window affects the triage model performance. Moreover, since the experiments showed that connections to known suspicious accounts are important features, it was investigated whether keeping a more extended memory for such suspicious accounts compared to legitimate ones is helpful. To this end, a different window for each event type, legitimate vs. suspicious, was used and retrain the best model for a realistic case of label delays, which uses only degrees features as described previously. Similar results were obtained when retraining the best model without label delay, using degrees+GW features, data not shown. A grid search was performed for values of these time windows between 0 days, i.e., events are not used in the graph at all, up to 90 days. For brevity, the time window for legitimate events is referred as TWL and to the time window for suspicious events as TWS.

Firstly, it was found that, for any value of TWS, the best performance is achieved for a TWL equal to one day. Secondly, the performance increases only marginally when increasing the TWS beyond 30 days. Therefore, a good model efficiently is constructed by keeping only one day of legitimate events and 30 days of suspicious events in the graph. Importantly, having separate time windows for legitimate and suspicious events implies knowing the label at least after the duration of the smallest time window. Thus, in this dataset it was found that for a label delay of 7 days, the best model constructed efficiently would be using a TWL of 7 days and a TWS of 30 days. Nonetheless, it is interesting that the data needed to construct the graph is significantly reduced without sacrificing performance.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof.

The above-described embodiments are combinable.

The following claims further set out particular embodiments of the disclosure.

### References

Oliveira, C.; Torres, J.; Silva, M. I.; Aparicio, D.; Ascensão, J. T.; and Bizarro, P. 2021. GuiltyWalker: Distance to illicit nodes in the Bitcoin network. arXiv preprint arXiv:2102.05373.
Ke, G.; Meng, Q.; Finley, T.; Wang, T.; Chen, W.; Ma, W.; Ye, Q.; and Liu, T.-Y. 2017. Lightgbm: A highly efficient gradient boosting decision tree. Advances in neural information processing systems, 30: 3146-3154.

## Claims

1. A computer-implemented method, comprising:
receiving data associated with transactions;
using one or more computer processors to analyze the received data using one or more rules to automatically identify potentially suspicious activities;
scoring each of the identified potentially suspicious activities using a machine learning model and based at least in part on analysis results of the one or more rules associated with the identified potentially suspicious activities; and
triaging the identified potentially suspicious activities including by determining an action to take with respect to at least a portion of the identified potentially suspicious activities based at least in part on the scoring of each of the identified potentially suspicious activities.

2. The method according to claim 1, further comprising extracting a first set of features and a second set of features associated with the received data, wherein:
the first set of features is used to analyze the received data using the one or more rules to automatically identify potentially suspicious activities, and
the second set of features is used to score each of the identified potentially suspicious activities using the machine learning model.

3. The method according to any of the previous claims, wherein triaging the identified potentially suspicious activities includes changing a priority of at least one of the identified potentially suspicious activities.

4. The method according to any of the previous claims, further comprising:
determining a scored list of the identified potentially suspicious activities;
providing the scored list of the identified potentially suspicious activities, optionally;
receiving feedback associated with the scored list of the identified potentially suspicious activities; and
updating the machine learning model based on the received feedback.

5. The method according to any of the previous claims, further comprising:
determining an explanation for a decision associated with the triaging; and
providing the explanation, wherein:
providing the explanation includes initially providing a second-level explanation that includes a grouping of features that belong to a same concept or semantic group.

6. The method according to the previous claim, wherein:
providing the explanation further includes providing a first-level explanation after providing the second-level explanation; and
the first-level explanation includes features and associated contributions used by the machine learning model to determine the decision associated with the automatic triaging.

7. A computer-implemented method for training the machine learning model, comprising:
configuring a machine learning model;
receiving training data; and
using one or more computer processors and the received training data to train the machine learning model to score potentially suspicious activities, wherein:
the potentially suspicious activities are identified by one or more rules in a set of rules, and the scoring of each of the identified potentially suspicious activities is used to determine an action to take with respect to at least a portion of the identified potentially suspicious activities.

8. The method according to the previous claim, further comprising, in response to a determination that at least one identified potentially suspicious activity is different from previously-identified potentially suspicious activities:
forming a set of potentially suspicious activities;
re-configuring the machine learning model in response to a determination that a threshold amount of labeled data has been gathered for the formed set of potentially suspicious activities; and
using the one or more computer processors and the gathered labeled data to re-train the machine learning model.

9. The method according to any of the claims 7-8, further comprising:
monitoring performance of the machine learning model; and
in response to a determination that the performance of the machine learning model is below a performance threshold, performing at least one of:
re-configuring the machine learning model, or
using the one or more computer processors to re-train the machine learning model;
wherein, preferably, the performance of the machine learning model is monitored continuously.

10. The method according to the previous claim, wherein monitoring performance of the machine learning model includes determining a label of at least one of the potentially suspicious activities that is assigned a score below a priority threshold by the trained machine learning model, preferably wherein those potentially suspicious activities assigned a score below the priority threshold for which labels are determined are randomly selected.

11. The method according to claim 9, wherein monitoring the performance of the machine learning model includes determining that the performance meets a performance threshold, the performance threshold being based at least in part on a percentage of positives in a group of potentially suspicious activities scoring below a priority threshold.

12. The method according to claim 9, wherein in response to the determination that the performance of the machine learning model is below a performance threshold,
re-configuring the machine learning model including by selecting a new model threshold, or
re-train the machine learning model using an explanation generated by the machine learning model, or
re-configure the machine learning model using an explanation generated by the machine learning model.

13. A computer-implemented system, comprising:
a processor configured to:
receive data associated with transactions;
use one or more computer processors to analyze the received data using one or more rules to automatically identify potentially suspicious activities;
score each of the identified potentially suspicious activities using a machine learning model and based at least in part on analysis results of the one or more rules associated with the identified potentially suspicious activities; and
triage the identified potentially suspicious activities including by determining an action to take with respect to at least a portion of the identified potentially suspicious activities based at least in part on the scoring of each of the identified potentially suspicious activities; and
a memory coupled to the processor and configured to provide the processor with instructions.

14. The system of claim according to the previous claim, wherein the processor is further configured to extract a first set of features and a second set of features associated with the received data, wherein:
the first set of features is used to analyze the received data using the one or more rules to automatically identify potentially suspicious activities, and
the second set of features is used to score each of the identified potentially suspicious activities using the machine learning model.

15. The system according to any of the claims 13-14, wherein the processor is further configured to:
configure the machine learning model;
receive training data; and
use one or more computer processors and the received training data to train the machine learning model to score potentially suspicious activities.
